# EUROPÄISCHE PATENTSCHRIFT

(11) **EP 1 084 341 B1**
(45) Veröffentlichungstag und Bekanntmachung des Hinweises auf die Patenterteilung: **18.08.2004**
(21) Anmeldenummer: 00922460.1
(22) Anmeldetag: 31.03.2000
(51) Int. Cl.: F02M 37/10, H02K 5/02, F04D 29/02, H02K 5/22

(54) **GEHÄUSE FÜR EINE MIT EINEM ELEKTROMOTOR ANGETRIEBENE FÖRDERPUMPE**
HOUSING FOR A FUEL PUMP DRIVEN BY AN ELECTRIC MOTOR
CARTER POUR UNE POMPE DE REFOULEMENT ACTIONNEE PAR UN MOTEUR ELECTRIQUE

(30) Priorität: 03.04.1999 DE 19915258
(43) Veröffentlichungstag der Anmeldung: 21.03.2001
(73) Patentinhaber: ROBERT BOSCH GMBH, 70442 Stuttgart (DE)
(72) Erfinder: SOYER, Wolfgang, D-75446 Wiernsheim (DE); KUEHN, Michael, D-74321 Bietigheim-Bissingen (DE); MAYER, Christine, D-71706 Markgroeningen (DE); RICHTER, Ingo, D-71706 Markgroeningen (DE)
(86) Internationale Anmeldenummer: PCT/DE2000/000984
(87) Internationale Veröffentlichungsnummer: WO 2000/060231

(56) Entgegenhaltungen:
- EP-A- 0 899 144
- DE-A- 3 417 266
- DE-A- 19 813 204
- DE-C- 19 843 021
- US-A- 3 507 582
- US-A- 4 596 519
- US-A- 5 013 222

## Beschreibung

### Stand der Technik

Die Erfindung betrifft ein Gehäuse für eine mit einem Elektromotor angetriebene Förderpumpe, insbesondere für eine Fördereinrichtung für Kraftstoff, nach dem Oberbegriff des Hauptanspruchs.

Bei solchen Fördereinrichtungen wird der Kraftstoff aus einem Kraftstofftank beispielsweise zu einem Einspritzsystem des Verbrennungsmotors eines Kraftfahrzeugs gefördert. Eine solche Fördereinrichtung ist aus der DE 44 44 854 A1 bekannt, bei der die Förderpumpe von einem Elektromotor angetrieben wird. Bei diesen Anordnungen ist es wichtig, dass keine elektrischen Entladungsvorgänge, die zu einer Entzündung des Kraftstoffs oder des Kraftstoff-Luft-Gemischs im Tank führen können, auftreten. Die entsprechende Ableitung von elektrostatischen Aufladungen ist bei den zum großen Teil aus konstruktiven Gründen aus Kunststoff hergestellten Bauteilen, die elektrisch nur schwachleitend oder auch nichtleitend sind, schwierig durchzuführen.

Der Gleichstrom-Elektromotor der bekannten Förderpumpe wird dabei üblicherweise kommutatorseitig ebenfalls durch einen Anschlußdeckel aus nichtleitendem Kunststoff mit einem Oberflächenwiderstand von größer 10¹⁴ Ohm verschlossen und kann somit nicht zur Ableitung elektrostatischer Ladung auf das Massepotential der Fördereinrichtung herangezogen werden, noch kann er elektromagnetische Strahlung, z.B. im Hochfrequenzbereich, abschirmen. Als weitere Möglichkeit könnte hier das Gehäuse der Förderpumpe wird mittels eines zusätzlichen Kontaktblechs auf Massepotential gelegt werden, womit jedoch keine Abschirmwirkung am Anschlussdeckel realisierbar ist. Eine komplette leitende Kappe würde hierbei einen zu großen Aufwand darstellen.

### Vorteile der Erfindung

Das eingangs beschriebene Gehäuse für eine mit einem Elektromotor angetriebene Förderpumpe, insbesondere für eine Fördereinrichtung für Kraftstoff, wird in vorteilhafter Weise mit den kennzeichnenden Merkmalen des Anspruchs 1 weitergebildet, wobei der kommutatorseitige Anschlussdeckel, an dem die elektrischen Anschlusskontakte und Pumpeneinlässe und/oder -auslässe angebracht sind, aus einem elektrisch leitfähigen Kunststoff hergestellt ist. Über eine elektrisch leitende Verbindung ist dann auf einfache Weise eine Verbindung zu einem Massepotential herstellbar.

Der Oberflächenwiderstand des Anschlussdeckels ist erfindungsgemäß so gewählt, dass eine Ableitung elektrostatischer Ladung an das Massepotential bei geringem Bau- und Kostenaufwand gewährleistet ist. Hiermit kann auch eine Abschirmung elektromagnetischer Strahlung im Hochfrequenzbereich auf einfache Weise vorgenommen werden. Da es für die Herstellung vorteilhaft ist, wenn direkt auf dem Anschlussdeckel die elektrischen Anschlusskontakten ohne weitere Isolierung liegen, kann durch eine richtige Wahl des Oberflächenwiderstandes sichergestellt werden, dass hier ein vorgebbarer Kurzschlussstrom, beispielsweise ca. 0,1 A, zwischen den Anschlusskontakten nicht überschritten wird. Vorzugsweise liegt der Oberflächenwiderstand des Anschlussdeckels im Bereich von 10⁴ Ohm.

Der Anschlussdeckel kann gemäß der Erfindung in vorteilhafter Weise großflächig einen elektrischen Kontakt mit den weiteren elektrisch leitenden Teilen des Gehäuses der Förderpumpe oder des Elektromotors aufweisen, um die Abschirm- und Ableitwirkung noch zu verbessern. Der leitfähige Kunststoff des Anschlussdeckels kann beispielsweise ein mit leitfähigen Metall- oder Carbonfasern versehenes Polyamid oder Polyoxymethylen sein.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Zeichnung

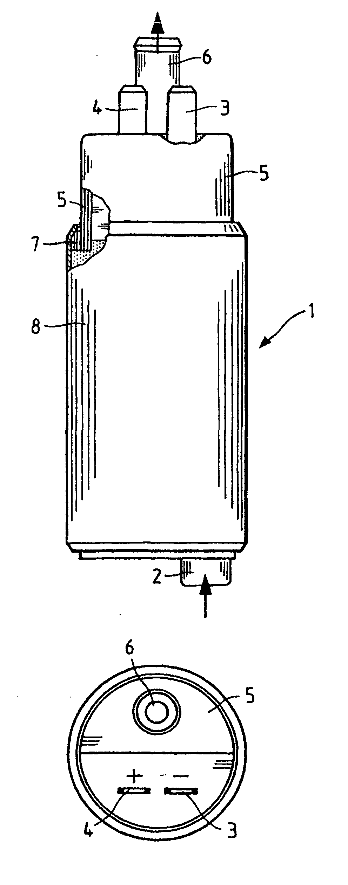

Ein Ausführungsbeispiel des erfindungsgemäßen Gehäuses für eine mit einem Elektromotor angetriebene Förderpumpe wird anhand der Zeichnung erläutert. In der einzigen Figur ist diese Förderpumpe als Bestandteil einer Fördereinrichtung für Kraftstoff in einem Kraftfahrzeug in zwei Ansichten dargestellt, die vormontiert in einen Kraftstofftank eingebaut werden kann.

### Beschreibung des Ausführungsbeisipiels

Eine Förderpumpe 1 nach der Figur kann beispielsweise in eine Kraftstoff-Fördereinrichtung eingebaut werden, die in der eingangs als Stand der Technik gewürdigten DE 44 44 854 A1 beschrieben ist.

Die Förderpumpe 1 wird im unteren Bereich eines Kraftstofftanks eingebaut, so dass die Förderpumpe 1 den Kraftstoff aus dem Bodenbereich des Kraftstofftanks in einen Einlass 2 ansaugen kann. Die Förderpumpe 1 wird von einem Elektromotor angetrieben. Der Elektromotor wird dabei über einen Anschlusskontakte 3 mit dem Minuspol und über einen Anschlusskontakt 4 mit dem Pluspol der Spannungsversorgung verbunden, was insbesondere auch aus der unteren Draufsicht der Figur auf einen kommutatorseitigen Anschlussdeckel 5 des Gehäuses ersichtlich ist.

Der Anschlussdeckel 5 ist gemäß der Erfindung aus einem leitfähigen Kunststoff hergestellt, beispielsweise ein mit leitfähigen Metall- oder Carbonfasern versehenes Polyamid, wobei der Oberflächenwiderstand des Anschlussdekkels 5 im Bereich von 10⁴ Ohm liegt. Somit kann eine Ableitung elektrostatischer Ladung vom Anschlussdeckel 5 an das Massepotential erfolgen und gleichzeitig auch eine Abschirmung elektromagnetischer Strahlung sichergestellt werden.

Auf dem Anschlussdeckel 5 sind die elektrischen Anschlusskontakte 3 und 4 ohne weitere Isolierung direkt neben einem Auslass 6 für den zu fördernden Kraftstoff angeordnet, wobei hier durch die Materialauswahl des Anschlussdeckels 5 ein vorgebbarer Kurzschlussstrom, beispielsweise ca. 0,1 A. Der Anschlussdeckel 5 ist bei dem dargestellten Ausführungsbeispiel großflächig über eine verbindungsstelle 7 unter elektrischem Kontakt mit einem unteren, in der Regel metallischen, Gehäuseteil 8 der Förderpumpe 1, bzw. des Elektromotors verbunden.

## Patentansprüche

1. Gehäuse für eine mit einem Elektromotor angetriebene Förderpumpe (1), insbesondere für eine Fördereinrichtung für Kraftstoff, bei dem kommutatorseitig ein Anschlussdeckel (5) für die elektrischen Anschlusskontakte (3,4) und Pumpeneinlässe und/oder -auslässe (6) vorhanden ist,
**dadurch gekennzeichnet, dass**
der Anschlussdeckel (5) aus einem elektrisch leitfähigen Kunststoff ist und über eine elektrisch leitende Verbindung eine Verbindung zu einem Massepotential herstellbar ist.

2. Gehäuse nach Anspruch 1, **dadurch gekennzeichnet, dass**
der Oberflächenwiderstand des Anschlussdeckels (5) so gestaltet ist, dass sich eine Ableitung elektrostatischer Ladung an das Massepotential mit einer Abschirmung elektromagnetischer Strahlung einstellt und ein vorgebbarer Kurzschlussstrom zwischen den direkt auf dem Anschlussdeckel (5) liegenden elektrischen Anschlusskontakten (3,4) nicht überschritten wird.

3. Gehäuse nach Anspruch 2, **dadurch gekennzeichnet, dass**
der Oberflächenwiderstand des Anschlussdeckels (5) im Bereich von 10⁴ Ohm liegt.

4. Gehäuse nach einem der vorhergehenden Ansprüche, **dadurch gekennzeichnet, dass**
der Anschlussdeckel (5) großflächig oder an mehreren Stellen am Umfang einen elektrischen Kontakt mit den weiteren elektrisch leitenden Teilen (7) des Gehäuses der Förderpumpe (1) aufweist.

5. Gehäuse nach einem der vorhergehenden Ansprüche, **dadurch gekennzeichnet, dass**
die Leitfähigkeit des Kunststoff durch einen Zusatz von Metall- oder Carbonfasern herstellbar ist.

6. Gehäuse nach einem der vorhergehenden Ansprüche, **dadurch gekennzeichnet, dass**
der Kunststoff vorzugsweise Polyoxymethylen oder Polyamid ist.

## Claims

1. Housing for a feed pump (1) driven by an electric motor, in particular for a feed device for fuel, in which there is on the commutator side a connection cap (5) for the electrical connection contacts (3, 4) and pump inlets and/or outlets (6), **characterized in that** the connection cap (5) is made of an electrically conductive plastic and a connection to an earth potential can be established by means of an electrically conducting connection.

2. Housing according to Claim 1, **characterized in that** the surface resistance of the connection cap (5) is designed to discharge electrostatic charges to the earth potential with shielding against electromagnetic radiation, and a predeterminable short-circuit current between the electrical connection contacts (3, 4) lying directly on the connection cap (5) is not exceeded.

3. Housing according to Claim 2, **characterized in that** the surface resistance of the connection cap (5) lies in the range of 10⁴ ohms.

4. Housing according to one of the preceding claims, **characterized in that** the connection cap (5) has over a large surface area or at a number of points on the circumference an electrical contact with the further electrically conducting parts (7) of the housing of the feed pump (1).

5. Housing according to one of the preceding claims, **characterized in that** the conductivity of the plastic is established by adding metal or carbon fibres.

6. Housing according to one of the preceding claims, **characterized in that** the plastic is preferably polyoxymethylene or polyamide.

## Revendications

1. Carter de pompe de refoulement (1) entraîné par un moteur électrique notamment pour une installation d'alimentation en carburant selon lequel, du côté du commutateur il est prévu un couvercle de branchement (5) pour les contacts de branchements électriques (3, 4) et des entrées de pompe et/ou des sorties de pompe (6),
**caractérisé en ce que**
le couvercle de branchement (5) est réalisé en une matière plastique conductrice électrique et une liaison conductrice électrique réalise une connexion vers le potentiel de masse.

2. Carter selon la revendication 1,
**caractérisé en ce que**
la résistance de surface du couvercle de branchement (5) est telle qu'il s'établit une évacuation de la charge électrostatique vers le potentiel de masse avec une protection contre le rayonnement électromagnétique et on ne dépasse pas un courant de court-circuit prédéterminé entre les contacts de branchement (3, 4) situés électriquement directement sur le couvercle de branchement (5).

3. Carter selon la revendication 2,
**caractérisé en ce que**
la résistance de surface du couvercle de branchement (5) est de l'ordre de 10⁴ Ohms.

4. Carter selon l'une des revendications précédentes,
**caractérisé en ce que**
le couvercle de branchement (5) a une surface importante ou présente en plusieurs endroits en périphérie, un contact électrique avec les autres pièces (7) conductrices électriques du carter de la pompe de refoulement (1).

5. Carter selon l'une des revendications précédentes,
**caractérisé en ce que**
la conductivité de la matière plastique est obtenue par l'addition de fibres de métal ou de carbone.

6. Carter selon l'une des revendications précédentes,
**caractérisé en ce que**
la matière plastique est de préférence en polyoxyméthylène ou en polyamide.
